# EUROPEAN PATENT APPLICATION

(11) **EP 1 560 126 A2**
(43) Date of publication of application: **03.08.2005**
(21) Application number: 05250450.3
(22) Date of filing: 28.01.2005
(51) Int. Cl.: G06F 17/21

(54) **Layout adjustment**

(30) Priority: 30.01.2004 JP 2004024488
(71) Applicant: CANON KABUSHIKI KAISHA, Ohta-ku, Tokyo (JP)
(72) Inventor: Kobashi, Kazufumi c/o Canon Kabushiki Kaisha, Ohta-ku Tokyo (JP); Hara, Kenta c/o Canon Kabushiki Kaisha, Ohta-ku Tokyo (JP); Makino, Jun c/o Canon Kabushiki Kaisha, Ohta-ku Tokyo (JP)
(74) Representative: Beresford, Keith Denis Lewis

(57) **Abstract**

In determining the layout of a page on the basis of layout information representing the intra-page layout of a plurality of containers in which images based on assigned data are visually drawn, the layout information has designation information to designate whether to zeroise the container size when data assigned to the container is empty. In adjusting the layout, a container to which empty data is assigned is detected from the plurality of partial regions. It is determined whether designation information corresponding to the detected container is designation to zeroise the size. If zeroisation is designated, the layout of the page is adjusted while regarding the size of the detected container as zero.

## Description

### FIELD OF THE INVENTION

The present invention relates to a technique of generating, editing, and printing a document containing texts and images and, more particularly, to generation, editing, and printing of a variable data document.

### BACKGROUND OF THE INVENTION

Since the merchandise service life decreases recently due to a variety of merchandise items, and the number of consumers with customization service orientation increases along with the penetration of the Internet, the necessity of CRM (Customer Relationship Management) and one-to-one marketing has received a great deal of attention. These methods are very effective for purposes of increasing the customer satisfaction and winning and networking new customers.

The one-to-one marketing is a kind of database marketing. Personal attribute information such as the age, sex, hobby, taste, and purchase log of each customer is stored as a database. The contents of the information are analyzed, and a proposal that meets customer's needs is presented. A typical method is variable print. Especially, along with the recent progress in DTP (DeskTop Publishing) technology and the spread of digital printers, variable print systems have been developed, which customize and output a document for each customer. Such a variable print system is required to create a customized document in which contents in quantity that changes for each customer are laid out in an optimum manner.

Generally, when such a customized document is to be created by a variable print system, containers are laid out on the document. A container indicates a partial region to draw a content (drawing content) and is sometimes called a field region. More specifically, containers are laid out on the document, and a database and the layout are associated with each other (each content in the database is associated with each container). With this operation, a customized document (document) is created. In this specification, such a document will be referred to as a variable data document.

In the variable print system, a content which is different for each customer can be inserted in each of the containers laid out. The size of data to be inserted in a content is flexible. If the size of a container is fixed, the following problem arises. For example, when text data having a size larger than the container size is inserted, the text cannot wholly be displayed in the container. Alternatively, when image data having a size larger than the container size is inserted, the image is partially missing. Such a problem is called overflow.

If the content is image data, the image may be reduced and drawn in the container. However, the image may be excessively small. There is also proposed a technique in which if text data whose size is larger than a fixed container size is inserted, the font size of the text is reduced to display the entire text in the container. However, if the font size is adjusted, it may be too small to balance the whole document, or the document may become difficult to read.

The "layout design apparatus" of Japanese Patent Laid-Open No. 7-129658 discloses an automatic layout technique to solve the above-described problems. In this technique, when the size of a container becomes large, the size of an adjacent container is reduced to maintain the interval between them.

In a variable print system, data inserted in each container can be changed for, e.g., each customer. Hence, data inserted in a container may be "empty" in some cases. In the above-described prior art, however, when data inserted in a container is empty, the container layout portion is blank. That is, the space for that container is blank in the document layout. When the noticeable blank portion is formed at part of the document, the appearance of the document is not good. Such a blank portion is preferably used by another container with inserted data to ensure an optimum size. However, since the blank container is present, the blank portion cannot be used.

### SUMMARY OF THE INVENTION

The present invention has been made in consideration of the above problems. An aspect of the invention creates a more great-looking document by effectively using the space of a container in which empty data is inserted.

According to one aspect of the present invention, there is provided a layout adjustment method of determining a layout of a page, comprising: a partial region setting step of setting a basic pattern of a size and position of a partial region in which data is to be inserted; a calculation step of calculating, for each partial region, a size suitable for drawing the data to be inserted on the basis of the data to be inserted in the partial region set in the partial region setting step; an adjustment step of adjusting the layout in the page on the basis of the size of each partial region calculated in the calculation step; and a designation step of designating whether to zeroise the size when the data assigned to the partial region is empty, wherein in the adjustment step, when a partial region to which empty data are assigned is designated to zeroise the size of the partial region in the designation step, the layout in the page is adjusted while regarding the size of the partial region as zero.

According to another aspect of the present invention, there is provided a layout adjustment apparatus for determining a layout of a page, comprising: partial region setting means for setting a basic pattern of a size and position of a partial region in which data is to be inserted; calculation means for calculating, for each partial region, a size suitable for drawing the data to be inserted on the basis of the data to be inserted in the partial region set by the partial region setting means; adjustment means for adjusting the layout in the page on the basis of the size of each partial region calculated by the calculation means; and designation means for designating whether to zeroise the size when the data assigned to the partial region is empty, wherein when a partial region to which empty data are assigned is designated to zeroise the size of the partial region in the designation means, the adjustment means adjusts the layout in the page while regarding the size of the partial region as zero.

According to the present invention, since the space of a container in which empty data is inserted can effectively be used, a more great-looking document can be created.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing an arrangement of a variable print system according to an embodiment;
Fig. 2 is a block diagram showing the schematic arrangement of a host computer shown in Fig. 1;
Fig. 3 is a view for explaining the outline of variable data print;
Fig. 4 is a block diagram showing another arrangement of the variable print system according to the embodiment;
Fig. 5 is a view showing an example of a user interface according to the embodiment, which includes a menu bar, tool bar, work area, and floating palette;
Fig. 6 is a view showing a display example of containers in the user interface;
Figs. 7A to 7D are views for explaining container rules according to the embodiment;
Fig. 8 is a flowchart for explaining link creation processing according to the embodiment;
Figs. 9A to 9C are views showing an example of transition of the user interface in creating a link;
Fig. 10 is a flowchart showing layout calculation processing by a layout engine according to the embodiment;
Fig. 11 is a flowchart showing layout calculation processing by the layout engine according to the embodiment;
Figs. 12A to 12C are views for explaining the layout calculation processing according to the embodiment;
Fig. 13 is a view for explaining a set of containers in layout calculation according to the embodiment;
Fig. 14 is a view showing an example of a layout created by using containers and links;
Fig. 15 is a view showing an example of a property dialogue window to set the attribute information of a container according to the first embodiment;
Fig. 16 is a flowchart for explaining the operation of a user interface in setting the properties of a container by using the property dialogue window shown in Fig. 15;
Fig. 17 is a view for explaining a change in layout when a container E is set in a zeroisation mode in the layout shown in Fig. 14;
Fig. 18 is a view for explaining a change in layout when the container E is set in the zeroisation mode and set such that link adjustment is executed in the layout shown in Fig. 14;
Fig. 19 is a flowchart for explaining layout adjustment processing of the layout engine according to the embodiment, including empty container zeroisation processing;
Fig. 20 is a view showing an example of a property dialogue window to set the attribute information of a container according to the second embodiment; and
Fig. 21 is a view showing a result obtained by adjusting the layout shown in Fig. 14 in accordance with the link adjustment method set by the dialogue window shown in Fig. 20.

### DETAILED DESCRIPTION OF THE PREFERRED EMBODIMENTS

Preferred embodiments of the present invention will now be described in detail in accordance with the accompanying drawings.

### «First Embodiment»

### <System Arrangement>

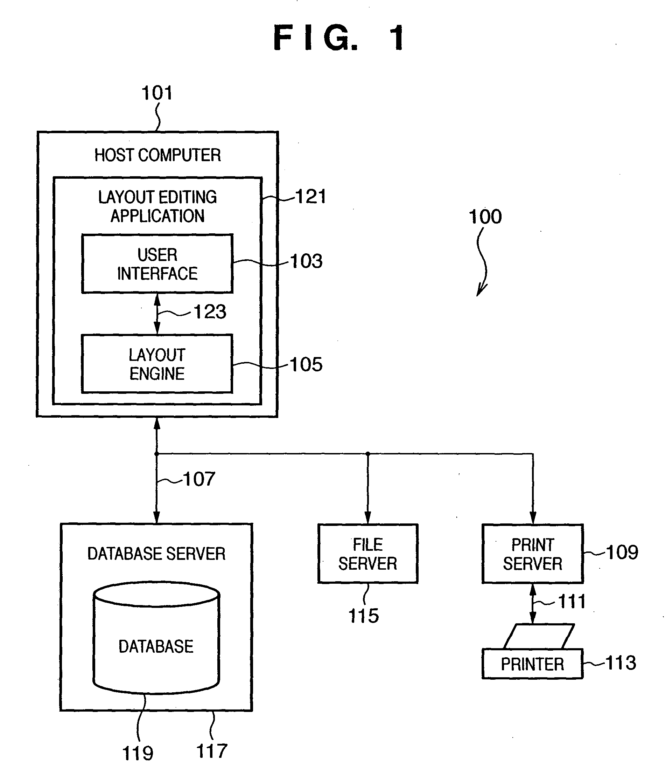

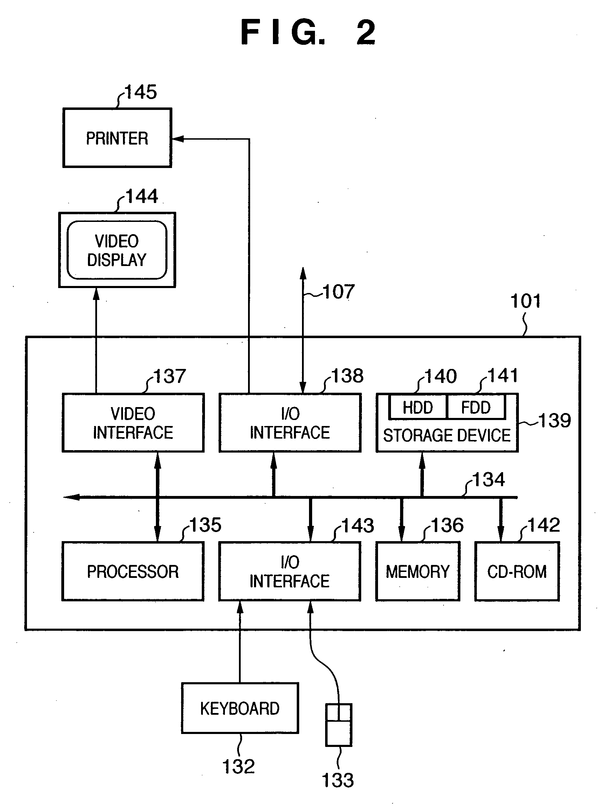

The arrangement of a variable print system according to the embodiment will be described first with reference to Figs. 1 and 2. Fig. 1 is a block diagram showing an arrangement of a variable print system 100 to print a variable data document. Fig. 2 is a block diagram showing the arrangement of a host computer 101 shown in Fig. 1 in more detail. Variable print processing to be described in this embodiment is executed by the host computer 101 (including general-purpose computer modules) serving as a layout adjustment apparatus. The software of a layout editing application program 121 (layout adjustment program according to the present invention) executable on the system 100 is wholly or partially executed by the host computer 101. Especially, processing for layout editing or processing for printing a variable data document is implemented by the software executed by the host computer 101.

The layout editing application program 121 is stored in a computer-readable medium. The layout editing application program 121 is loaded from the computer-readable medium to a memory 136 of the host computer 101 and executed. The computer-readable medium which stores such software or computer program is a computer program product. When the computer program product is used by a computer, an apparatus suitable for layout editing or variable print of a document is provided.

As shown in Fig. 2, a keyboard 132 and a pointing devices such as a mouse 133 or the like serving as input devices are connected to the host computer 101 through an input/output interface 143. A display device 144 serving as an output device is connected through a video interface 137. A local printer 145 or the like may be connected through an input/output interface 138. The input/output interface 138 also has a function of connecting the host computer 101 to a network 107. With this arrangement, the host computer 101 can be connected to another computer apparatus in the system 100 through the network. Typical examples of the network 107 are a local area network (LAN) and wide area network (WAN).

As shown in Fig. 2, the host computer 101 includes at least one processor unit 135 and the memory unit 136 including, e.g., a semiconductor random access memory (RAM) and read-only memory (ROM). A storage device 139 includes a hard disk drive 140 and floppy (registered trademark) disk drive 141 capable of transmitting/receiving data to/from the computer-readable medium which stores the program. Although not illustrated in Fig. 2, a magnetic tape drive can also be used as the storage device 139. A CD-ROM drive 142 is provided as a nonvolatile data source (the computer program may be provided by a CD-ROM, as a matter of course).

Typically, the host computer 101 uses the components 135 to 143 of the computer modules communicating through an interconnection bus 134 in a form according to an operating system such as GNU/LINUX or Microsoft Windows (registered trademark) or by a method by the conventional operation mode of a computer system known in an associated technique. That is, the above-described components 135 to 143 are communicably connected through the bus 134 and used by the operating system installed in the host computer 101.

Examples of the host computer 101 shown in Fig. 2 are an IBM-compatible PC or Sparcstation available from SUN, or a computer system including them.

### <Outline of Layout Editing Application>

In this embodiment, the layout editing application program 121 is resident in the hard disk drive 140, and its execution or load is controlled by the processor 135. The hard disk drive 140 and semiconductor memory 136 are used to store the program of the layout editing application 121 and data fetched from the network 107.

As an example, the encoded program of the layout editing application program 121 is stored in a CD-ROM or floppy (registered trademark) disk, loaded through the corresponding drive 142 or 141, and installed in the hard disk drive 140. As another example, the layout editing application program 121 may be loaded from the network 107 into the host computer 101 and installed in the hard disk drive 140. The software may be loaded in the host computer 101 by using a magnetic tape, ROM, integrated circuit, magnetooptical disk, wireless communication using infrared rays between the host computer 101 and another device, a computer-readable card such as a PCMCIA card, or email communication with another appropriate computer on a WEB site including the Internet or an intranet. These are examples of computer-readable media. Any other computer-readable medium may be used.

Referring to Fig. 1, the layout editing application 121 of this embodiment causes the computer to execute variable print (also called variable data print (VDP)) and includes two software components, i.e., a layout engine 105 and user interface 103. The layout engine 105 is a software component which loads each record of variable data stored in a database 119 in accordance with the constraints of the sizes and positions given to containers (rectangular ranges) as partial regions and calculates, on the basis of the loaded data and the constraints of the containers, the size and position of each container in which the loaded data should be inserted. In this embodiment, the layout engine 105 also executes processing of drawing data assigned to a container to generate an image of a variable data document. However, the present invention is not limited to this. The layout engine 105 may run as an application to determine the size and position of each partial region (container) and output drawing information to a printer driver (not shown). Accordingly, the printer driver may execute image drawing processing of a variable data document and generate print data. The user interface 103 allows a user to set the layout and attribute of each container and causes him/her to create a document template. In addition, the user interface 103 provides a mechanism to associate each container in the document template with a data source. The user interface 103 and layout engine 105 communicate with each other through a communication channel 123.

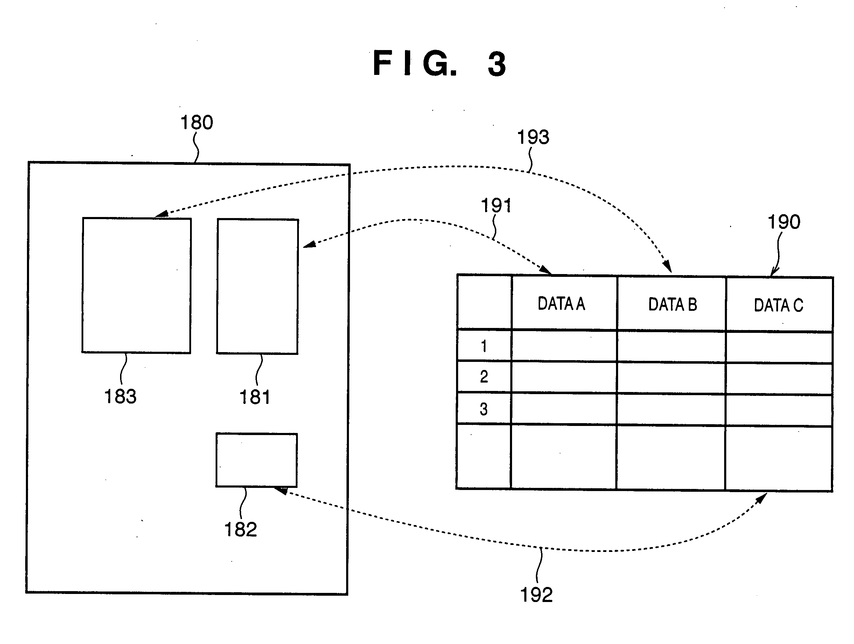

Fig. 3 is a view for explaining the outline of variable data print according to this embodiment. A plurality of containers 181 to 183 are laid out on a page in accordance with an operation instruction from the user through the user interface module 103 (to be referred to as the user interface 103 hereinafter) of the layout editing application 121. Then, constraints about the position and size are given to each container, thereby generating a document template 180. The user interface 103 also associates the document template 180 with a data source 190 and each container with a data field in the data source 190. The association information representing the association between each container and a data field in the data source 190 is described in the document template. The document template is stored in the HDD 140. The data source 190 is a file in which item data is described for each record. The data source 190 is stored in the HDD 140. In accordance with a print instruction or preview instruction from the user, the layout engine 105 loads the data associated by the association information from the data source 190, inserts the data in the containers 181 to 183 of the document template for each record (for example, data fields A to C of data record 1 are inserted in the containers 181 to 183), and adjusts the size of each container in accordance with the inserted data (layout adjustment). When a preview instruction is input, a layout-adjusted document image is generated and output so that the image is displayed on the screen of the video display 144 as a preview. When a print instruction is input, a document image generated by using the layout engine 105 or printer driver is output to the print server 109 as print data. Variable data print is implemented by sequentially processing data records 1, 2, 3,....

The data source (190) for document generation may be, e.g., the general database 119 on a database server 117 formed by another computer on which the database application is executed. In this case, the host computer 101 can acquire the data source by communicating with the database server 117 through the network 107. The document template (180) for variable data print, which is generated by the layout editing application 121, is stored in the host computer 101 or a file server 115 formed by another computer. As described above with reference to Fig. 3, the layout engine 105 of the layout editing application 121 generates a variable data document containing a document template merged with data. The document is stored in the local file system of the host computer 101 or in the file server 115, or transmitted to and printed by a printer 113. The print server 109 is a computer to provide a network function to a printer which is not connected directly to the network. The print server 109 and printer 113 are connected through a general communication channel 111.

### <Another System Arrangement>

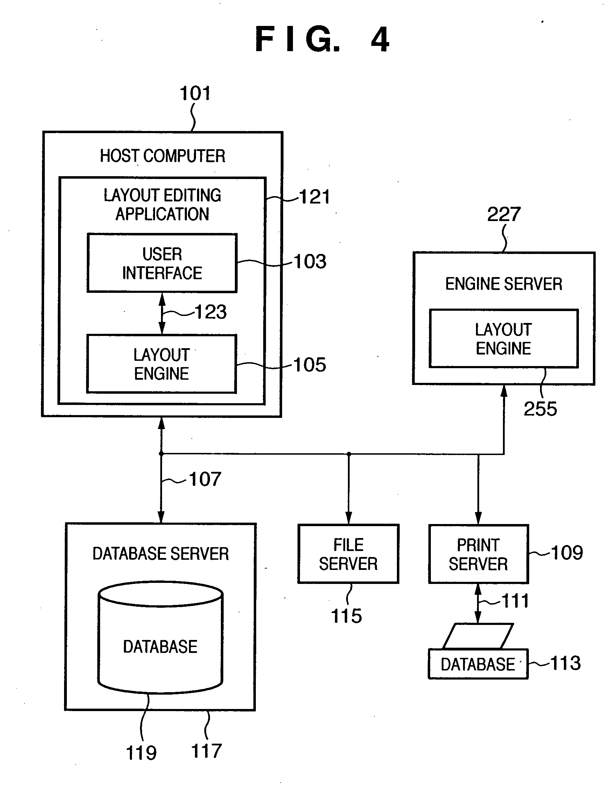

Fig. 4 is a block diagram similar to Fig. 1. An engine server 227 is added. A layout engine 225 stored in the engine server 227 is a separate version of the layout engine 105. As the engine server 227, a general computer is used. The layout engine 225 combines a document template stored in the file server 115 with data stored in the database 119 to generate a variable data document for printing or another purpose. This operation is requested through the user interface 103.

### <Description of Layout Editing Application>

The layout editing application 121 will be described below.

### [Main Window]

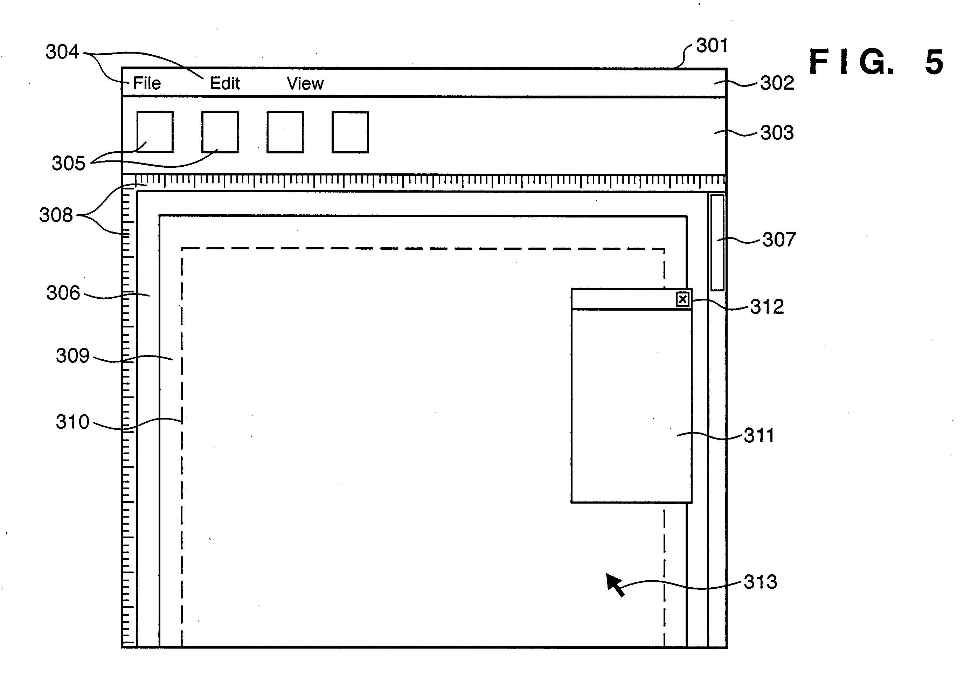

At the time of operation, the user interface 103 causes the video display 144 to display a user interface window formed by an application window 301 shown in Fig. 5. The window 301 has a menu bar 302, tool bar 303, work area 306, and optional palette 311. The menu bar 302 and tool bar 303 can be set in a non-display state or moved to various positions on the screen. The position of the work area 306 can be moved by operating the mouse 133. The palette 311 is an option. A cursor/pointer device 313 represents a position indicated by the mouse 133.

The menu bar 302 as a known technique has a number of menu items 304 extended under the layer of menu options.

The tool bar 303 has a number of tool buttons and widgets 305 which can be set in a non-display state or display state by a special mode of the application.

A ruler 308 is an option and is used to indicate the position of a pointer, page, line, margin guide, container, or object in the work area.

The palette 311 is used to access an additional function such as a variable data library. The palette 311 has a window control 312 to move, resize, or close it. The palette 311 can optionally be displayed on the foreground of the work area or hidden behind an object. The palette 311 can be displayed only within the application window 301 or can partially or wholly be displayed outside the application window 301.

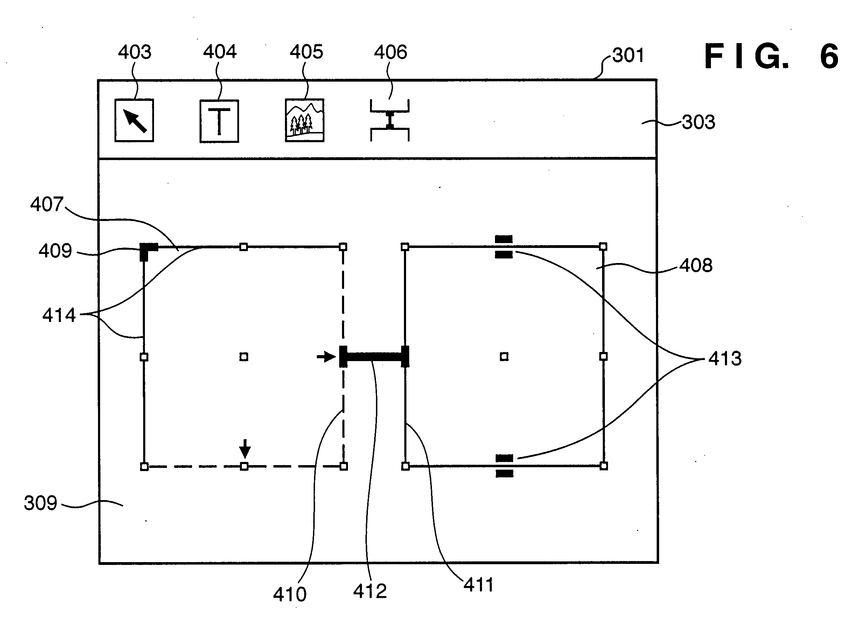

User-selectable "buttons" as shown in Fig. 6 are laid out on the tool bar 303.
(1) Select tool button 403: This button is used for side selection, movement, size change, resize, or lock/unlock of a container. A container is selected by dragging a select box around the container. When a plurality of containers are selected while keeping the CTRL key pressed, the plurality of containers can be selected.
(2) Text container tool button 404: This button is used to create a container having a static or variable text.
(3) Image container tool button 405: This button is used to create a container having a static or variable image.
(4) Link tool button 406: This button is used to create a link to associate containers with each other. This button is also used to control the distance of the link.

In the application window 301 of the layout editing application 121 shown in Fig. 5, when containers and links are laid out in a page, a basic layout can be determined. The basic layout is a layout as a base of variable data print. When all containers in the basic layout are fixed containers, all record print results have the same layout. When containers in the basic layout are flexible containers, the size or position of each container varies within the constraint range (to be described later) in accordance with the amount or size of data inserted for each record. The document template created by the layout editing application 121 is strictly used to determine the basic layout. When a flexible container is included, the final layout of a printed product is adjusted in accordance with loaded data.

### [Document Template]

Referring to Fig. 5, the work area 306 is used to display and edit the design of the document template (180: basic layout). The outline of a document to be printed can be presented to the user in the process of causing him/her to design the document template. Accordingly, the user can easily understand how the document merged with the data source (190) changes on the basis of the amount and size of variable data.

When the data source is associated with the document template, a corresponding variable text or image is displayed in each container laid out so that a preview of the current document can be obtained.

In the document template creation mode, visual keys (e.g., frame lines of containers, anchors, sliders, and links) which express the document structure and variable data containers in the document template are always displayed. In the preview mode in which variable data are inserted, the visual keys are displayed when the cursor is moved onto a container, or a container is selected.

The work area 306 includes a scroll bar 307, the optional ruler 308, and a document template 309. The document template 309 can indicate the presence of a plurality of pages. The document template 309 indicates the document template 180 shown in Fig. 3.

The page size of a given document template is designated by the user by using a known technique. For example, "Page Setup" is selected from "File" of the menu to display a dialogue to set the page size, on which the page size designated by the user is reflected. The actual number of pages of each document can change depending on the variable data in the associated data source. This is because when a field like a flexible table whose size is changed in accordance with the amount of variable data is set in the document template, and variable data which cannot be fitted in one page is loaded, an additional page is automatically created.

A border 310 shown in each page is an arbitrary page margin representing the maximum width of an object printable on the page.

Fig. 6 is a view showing examples of objects which can be displayed on the document template 309 of one page. The objects include containers 407 and 408, an arbitrarily applied anchor icon 409, fixed sides 411 and 414, an unfixed side 410, a link 412, and sliders 413. The anchor icon 409 can be set at a corner or side of the rectangle of a container or the center of a container. When the anchor icon 409 is set, the position of the set point is fixed. That is, in the example shown in Fig. 6, the anchor icon 409 is set at the upper left corner of the container 407. When variable data is inserted in the container 407, and the image size or text amount of the variable data is large, the container can be enlarged to the right and lower sides. When the anchor icon 409 is set on a side, the side is fixed. The container can be enlarged in the directions of the three remaining sides. When the anchor icon 409 is set at the center of a container, the central position of the container is fixed. The container can be enlarged in four directions without changing the central position of the rectangle of the container. The link 412 (to be described later in detail) indicates that the containers 407 and 408 are associated with each other. The link 412 indicates that the container 408 can be moved to the right while maintaining the length (the range can be designated) set for the link. The sliders 413 indicate that the container can be moved in parallel to the sides on which the sliders are set.

### [Container]

A container will be described. A container is a space (called a partial region) where a fixed or flexible text or image is inserted from a variable data file to the document template and drawn. A container is laid out together with other containers and objects, as shown in Fig. 6. Movement, size adjustment, and re-creation of the container are done by operating the mouse 133 on the basis of an operation instruction from the user through the user interface window.

More exactly, the container has a set of settings, visual expression, interaction, and editing operation. The definition of a container according to this embodiment will be described below.
(1) A container has a fixed or flexible content. A flexible content can be regarded as dynamic because data acquired from the data source can change for each document, i.e., each record. In this embodiment, however, animated contents and contents which change over time by another method are not assumed as a flexible content because they are not suitable for printing. A fixed content is displayed in a similar manner in all documents generated by using containers. However, when a link is set between a fixed content and a flexible content, the fixed content may be affected by the flexible content and change its position in each document.
(2) A container has ornament functions like text settings such as a background color, border, and font style applied to a content. This setting is called a container attribute. The container attribute can be set for each container. The setting can also be done such that a container has the same container attribute as another container.
(3) A container is merged with data from the data source in generating a document. The ornament function can visually be recognized on a printed output product for all fixed contents. A flexible content provides display of specific data from the data source. This expression of the container can be, e.g., printed or displayed on the screen of the video display 144, or subjected to both printing and display.
(4) A container has a user interface as a visual key, as shown in Fig. 6. A container has, e.g., an interactive graphical user interface (GUI) to edit the container or display settings. Each element of the GUI is displayed on the screen of the video display 144 but not printed in the document. The user interface 103 of the layout editing application 121 has a function of displaying some of the ornament functions of a container such as the background color and font and allowing editing and display of settings of the container.

### [Constraints of Container]

Each container has constraints about control for the manner by which contents displayed by the respective documents are combined. These constraints (including combining a fixed or flexible content with a container) are used as a principal method of causing the user to control the generations of a number of documents from one document template. An example of the constraint is "the maximum height of the content of this container is 4 inches". Another example of the constraint is "the left edge of the content of the container must be displayed at the same horizontal position in each document". The contents described here indicate various methods of displaying and editing such constraints by using the GUI.

A content place holder which designates the layout of a fixed content like an image having a defined place on a page is well-known in the digital print technique. Each container has a position and size. The containers are edited and displayed by a method as a known technique. The following description will be made with a focus on display and editing in a method specialized to variable data print.

When containers are used, the user can designate the sizes (drawing sizes) and positions of contents in a document. Since many kinds of documents are generated from one document template, a number of possibilities and constraints are set for the containers. To set (designate) and display them, a predetermined user interface is used.

The sides of one container define the virtual border of an associated content displayed in the document. Hence, discussion about the left side of a container is equivalent to discussion about the leftmost side of an area where an associated content can be displayed in each document. Similarly, discussion about the height of a container can be understood as discussion about the constraint of the height of an associated content in the generated document. In this specification, they are clearly distinguished in discussing the side or size of a container by referring to the user interface 103.

In the following description, the term "fixed", which defines a certain value used to restrict display of a content, applies to all documents in the same way.
(1) When the width of a container is fixed, the width to be assigned to an associated content is the same in all documents.
(2) When the height of a container is fixed, the height to be assigned to an associated content is the same in all documents.
(3) When a distance (link length) is fixed, the designated distance is a constraint in all documents.
(4) When the left and right sides of a container are fixed, the horizontal positions of sides related to the page are the same in all documents. However, the height or vertical position of the container can change. For example, when the left side of a container is fixed, the left side of an associated content is displayed at the same horizontal position in all documents. However, the content may be displayed on the upper side of the page in a document and on the lower side of the page in another document.
(5) When the upper and lower sides of a container are fixed, the vertical positions of sides in the page are the same in all documents. However, the width or horizontal position of the container can change for each document.
(6) The vertical axis of a container is a virtual vertical line which is parallel to the right and left sides of the container and is located at the intermediate position therebetween. When the vertical axis of the container is fixed, the average of the horizontal positions of the left and right sides of the container (i.e., the central position between the left and right sides) is the same in all documents. In this constraint, the width of the container can change. However, the vertical axis is located at the same horizontal position in all of documents independently of whether the left and right sides are closest to or farthest from the vertical axis. Note that the height and vertical position of the container are not affected by this constraint.
(7) Similarly, when the horizontal axis is fixed, the average of the upper and lower sides of a container is located at the same vertical position. However, the width and horizontal position of the container are not affected by this constraint.
(8) When both the horizontal axis and the vertical axis are fixed, the central position of the container is fixed. However, the width and height of the container are not affected by this constraint.
(9) When the courner position of a container, the intermediate position of a side of a container, or the central position of a container is fixed, the position is the same in all documents. For example, when the upper left corner of a container is fixed, the upper left position of the container laid out is the same in all documents.
(10) The vertical sides or vertical axis can be fixed in association with the left or right side of the page, left or right page margin, or another horizontal position. Similarly, the horizontal sides or horizontal axis can be fixed in association with the upper or lower side of the page, upper or lower page margin, or another vertical position.

A term opposite to "fixed" is "flexible" which indicates that a side, axis, corner, or intermediate position of a container or a document constraint can change between documents (between records). For example, in a page, the layout is expected to dynamically change depending on the size or amount of variable data. However, the user may want that the size or position of a specific container is fixed, or the four corners of a container at a corner of the page is fixed. For this purpose, the layout editing application 121 can appropriately set, for each container (partial region), whether to fix or change a side, axis, corner, or intermediate position. Hence, the user can create a desired basic layout in determining the basic layout of the document template 180.

### [Display/Editing of Container]

### --Method of Creating New Container--

Containers are described in two types, i.e., text container and image container. A text container has a text and an embedded image. An image container has only an image.

As shown in Fig. 6, a new text container or image container is created on the document template 309 by clicking the mouse 133 on the text container tool 404 or image container tool 405 and dragging a rectangle on the document template 309.

Alternatively, a container may be created by activating the appropriate tool 404 or 405 and simply clicking the mouse on the document template 309. In this case, a container having a default size is inserted on the template in accordance with the click operation of the mouse 133. In addition, a dialogue box or prompt to set the size of the new container is provided. The container size can be set by various methods. For example, the size may be defined automatically in advance, or a container may be created and laid out by a calculated schema. When the generated container is selected by an input means such as the mouse, and its properties are displayed by clicking on the right button of the mouse, the container property dialogue is displayed so that constraints for the container can be set. In the container property dialogue UI (corresponding to a partial region setting means), various kinds of constraints described above can be set. In the container property dialogue, the size (width and height) and position of the container can be set. To set a flexible size, the basic pattern (basic size and reference position) of the container is set. In addition, the maximum container size (width and height) and the minimum container size (width and height) can be set.

### [Container Display Method]

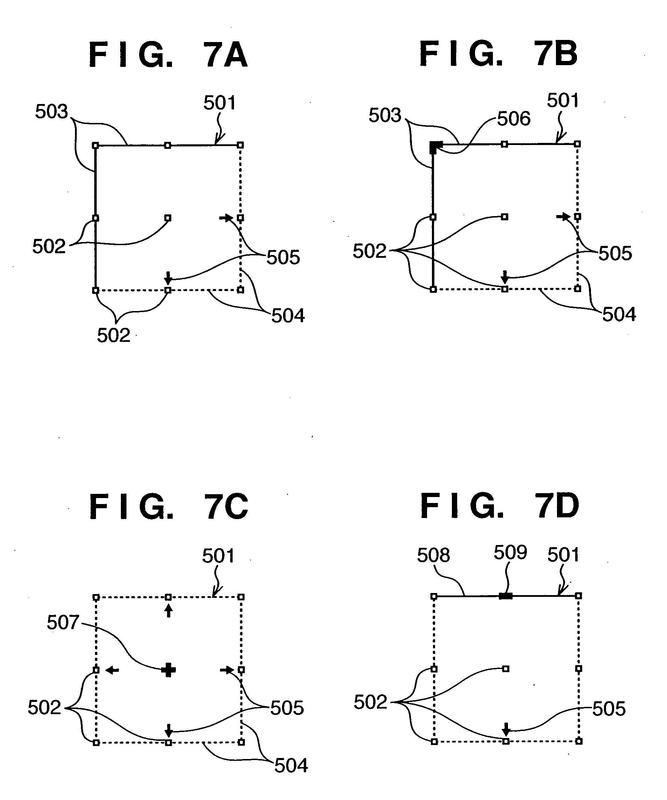

Figs. 7A to 7D show display rules about the sides of a container.

To express the state of a side of a container, the application 121 expresses a side by using a solid line (item 503) or a dotted line (504). In addition, the application 121 uses anchors (line, shape, and icon indicated by 506, 507, and 509 drawn near the sides), handles (control points 502 drawn on or near the sides of the region for movement and correction), sliders (short parallel lines drawn on both sides of a side, 413 in Fig. 6), enlarge/reduce icons (505), and colors.

The rules of the container display method shown in Figs. 7A to 7D are as follows.
(1) A fixed side is drawn by a solid line.
(2) When the width is fixed, the left and right sides are drawn by solid lines.
(3) When the height is fixed, the upper and lower sides are drawn by solid lines.
(4) The axes are not drawn.
(5) Enlarge/reduce icons are drawn near each of sides which are not drawn according to the rules (1) to (3). The sides are drawn by dotted lines.
(6) When the pair of vertical and horizontal sides or the pair of vertical axis and horizontal axis are fixed, an anchor is drawn at the intersection between them.
(7) When no anchor is drawn anywhere on a fixed side, a slider is drawn at the center of the edge.
(8) When neither anchor nor slider is drawn for the pair of vertical and horizontal sides or the pair of vertical axis and horizontal axis, a handle is drawn at the intersection between them.

The lines defined by the rules (1), (2), and (3) are fixed or restricted, as described above, and drawn by solid lines. Flexible sides defined by the rule (5) are drawn by dotted lines. Anchors are represented at fixed points defined by the rules (6), (7), and (8). Sliders are represented at some fixed sides. Handles are represented at remaining points.

In the above-described rules, higher priority is given to a constraint set by the user later. That is, when another constraint is set later, and it can affect sides which should be drawn in accordance with the above-described rules, the drawing contents of solid line or dotted lines are changed.

The location where a flexible side is drawn depends on the content of that container. As will be described later, "dynamic calibration processing" is used, which indicates that a content is merged with a document template and made visible by the user interface. Another means for determining the layout position of a flexible side in the user interface can be used. For example, the container size averaged in all documents (the content area) is used for determining the layout position of a flexible side in the user interface.

These content expressions provide a graphical means for displaying the state of each side of a container. The expressions can be interpreted in the following way.
(1) A dotted line indicates that the position of the side in the document changes depending on the content of the container, like the side 410 shown in Fig. 6.
(2) A solid line indicates that the side is restricted because it is fixed (side 411), or the width or height of the container is fixed (in the container 408, the four sides are indicated by solid lines so that both the width and height are fixed).
(3) An anchor indicates that the point where sides or axes cross is fixed. Hence, the anchor point appears at the horizontal and vertical positions in all documents. The anchor is fixed, as a matter of course. The icon 409 in Fig. 6 is an example of an anchor icon which indicates that the position at which the sides 414 cross is fixed.
(4) A slider indicates that the associated side can be translated although it has a fixed length. For example, the sliders 413 in Fig. 6 indicate the content of the container 408 may be displayed on the left or right side of a position represented by a specific diagram in the document. For example, when the image size or text amount of data inserted in the container 407 associated with the container 408 (a link is set between the containers) is small, the size of the container 407 becomes small. For this reason, the container 408 is slid (translated) to the left and laid out. When the size of the container 407 becomes large, the container 408 is slid conversely to the right and laid out.

Some or all of these icons and sides are drawn or not drawn depending on which tool or which container is selected/highlighted or activated. Generally, the container sides and icons are not drawn on a printed product because they are assistant tools for designing the document template.

As described above, settings for the basic pattern including the basic values, minimum values, and maximum values of the width and height of a container are displayed in a secondary dialogue window.

Referring to Fig. 7A, in a container 501, neither the width nor height is fixed (flexible). The fixed sides 503 are expressed by solid lines. The flexible sides 504 are expressed by dotted lines. The enlarge/reduce icons 505 represent the adjacent sides 504 are flexible. An indicator in another form may be used instead or additionally.

Referring to Fig. 7B, in the container 501, both the width and height are flexible. The anchor icon 506 is added to explicitly represent that the position of the corner at which the sides 503 cross is fixed.

Referring to Fig. 7C, in the container 501, both the width and height are flexible. In this state, the container can extend equally from the central point indicated by the anchor icon 507. That is, the container 501 can be enlarged or reduced about the anchor icon 507. In enlargement/reduction, the layout is adjusted such that the anchor icon 507 is always located at the central point of the container 501.

Referring to Fig. 7D, although an upper side 508 of the container 501 is fixed, both the width and height are flexible. The anchor icon 509 located at the center of the upper side 508 is fixed. The left and right sides of the container 501 enlarge or reduce the container about the central axis (vertical axis) extending perpendicularly through the anchor icon 509.

### [Link Setting Method]

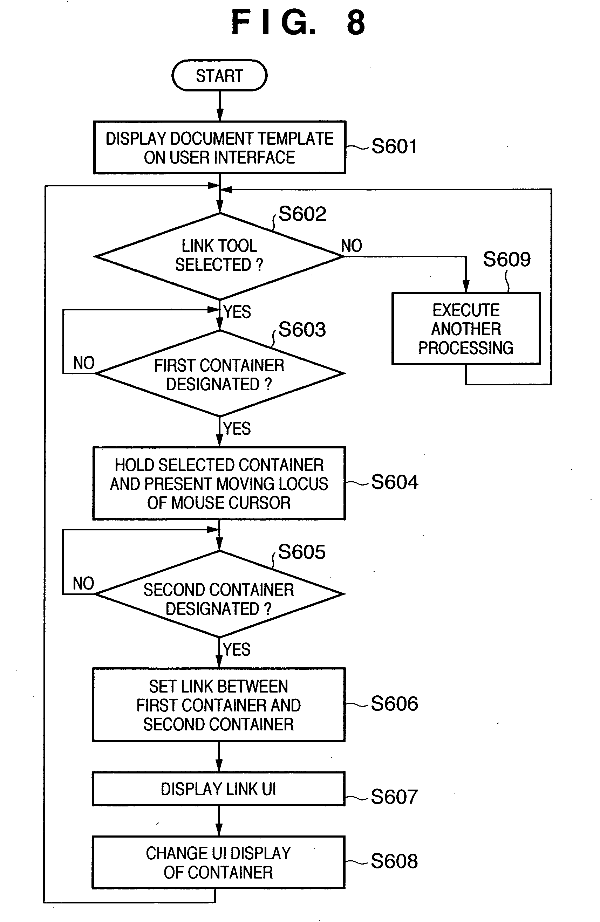

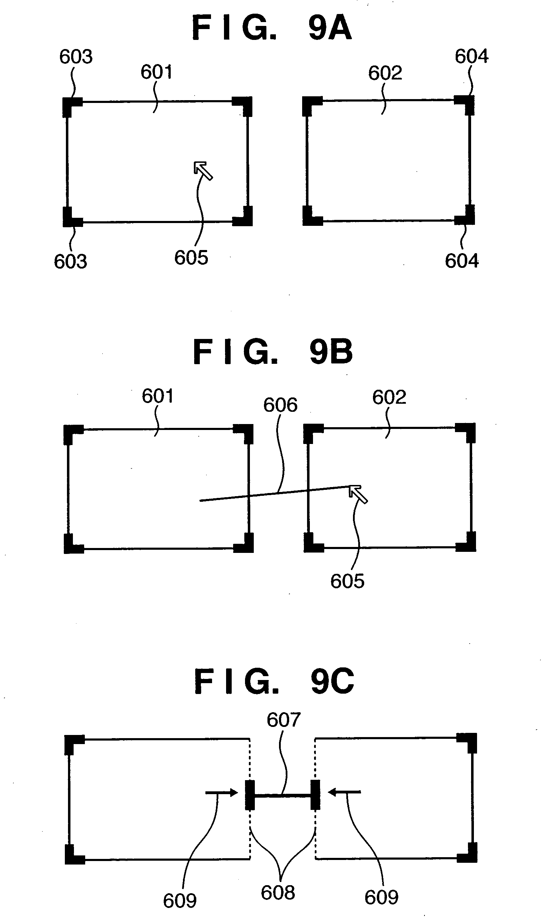

Setting of a link to associate containers with each other will be described next. Fig. 8 is a flowchart showing the link setting method. Figs. 9A to 9C show an example of transition of the user interface (UI) in setting a link. A method of setting a link between containers will be described with reference to Figs. 8 and 9A to 9C.

First, in step S601, the layout editing application 121 displays a document template selected for editing on the work area 306 of the user interface window. To set a link, containers (at least two containers) to set a link must be created on the document template. Figs. 9A to 9C show an example of transition of the user interface when two containers are created in step S601, and a link is set.

In step S602, the layout editing application 121 determines whether the above-described link tool is set in a selected state (a selected state is set by clicking on the button 406 shown in Fig. 6). If NO in step S602, another processing is executed as needed (step S609), and the flow returns to step S602.

Referring to Fig. 9A, containers 601 and 602 have only fixed sides. Reference numerals 603 and 604 denote anchors which are the same as the anchor 409 in Fig. 6; and 605, a mouse pointer. When the link tool button 406 is in the selected state, the user clicks on one (container 601) of the two containers, for which a link is to be set, to select the container. In accordance with this operation, the user interface 103 of the layout editing application 121 recognizes that the first container is designated (step S603) and holds information to specify the selected container. In addition, a locus corresponding to further movement of the mouse cursor is displayed on the screen (step S604). For example, a line segment 606 shown in Fig. 9B indicates a line which connects the click point in the state shown in Fig. 9A and the current position of the mouse cursor. With this UI, the position where a link is to be set can explicitly be presented to the user.

Next, as shown in Fig. 9B, the user moves the mouse pointer to the other container (container 602) and clicks on it. In accordance with this operation, the user interface 103 recognizes that the second container is designated (step S605). The layout editing application 121 sets a link between the first container held in step S604 and the second container recognized in step S605 as a designated container (step S606).

When the link is set between the two containers 601 and 602 selected by the user, a link UI 607 is displayed (step S607). In addition, when the link is set, the display state of the containers changes to that shown in Fig. 9C (step S608). That is, when the link is set, the UI of the containers is automatically changed. In this case, the sides associated with each other by the link change to flexible sides and are indicated by dotted lines. Referring to Fig. 9C, sides 608 are indicated by dotted lines. That is, the sides 608 are flexible sides, as described above.

The state of the sides of the containers is automatically changed, as shown in Fig. 9C, because the containers must have flexible sides due to link setting. This aims at preventing any contradiction which may occur when all sides are fixed even after link setting. Marks 609 visually show the user the directions in which the containers can change due to link setting, like the icons 505 shown in Figs. 7A to 7D. In the example shown in Fig. 9C, the right side of the left container and the left side of the right container change to flexible sides. This is merely an example. For example, the right container may change to setting with the sliders 413 in Fig. 6.

### <Layout Calculation Processing by Layout Engine>

### [Layout Calculation Method (Overall Flow)]

The layout editing application of this embodiment has a layout mode in which containers are created by using the user interface 103, and a layout is created by associating the containers with each other (link setting), and a preview mode in which each record of a data source is inserted in the created layout by the layout engine 105, and the layout result after actual record insertion is previewed. In the preview mode, actual records are inserted, and a layout is calculated in accordance with the above-described priority order. In the preview mode, however, the layout for display is calculated. Even in actual printing, the layout is calculated by causing the layout engine 105 to insert data in each container. The calculation method at this time is the same as in the preview mode.

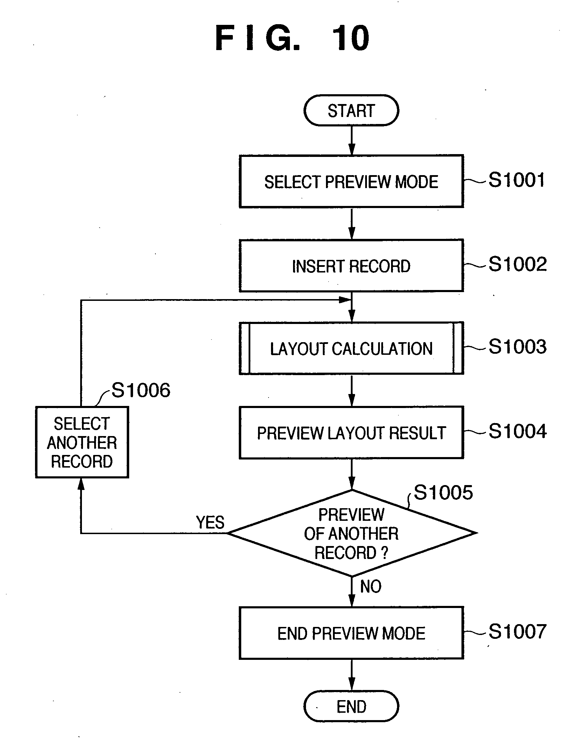

Fig. 10 shows the flow of layout calculation. First, the preview mode is selected (step S1001). In the preview mode, the layout editing application 121 causes the user to select a record to be previewed from the data source and determines to insert each field data of the selected record in each container (step S1002). When insertion of the field data in each container is determined, the layout editing application 121 executes calculation to lay out the record and executes layout adjustment as needed (step S1003). The layout calculation in step S1003 will be described later in detail. The layout editing application 121 displays the layout calculated in step S1003 (step S1004). The layout editing application 121 determines in accordance with a user instruction whether to preview another record (S1005). If NO in step S1005, the preview mode is ended (S1007). If YES in step S1005, the layout editing application 121 selects another record, executes layout calculation again, and previews the layout (step S1006).

When not the preview mode but the print mode is set, layout calculation is done sequentially for all records to be printed. Hence, step S1004 is omitted. In step S1005, it is determined whether all records to be printed are processed. The result calculated in step S1003 is output, and print data is generated by using the printer driver and output to the printer. In this case, when print data output is ended for all records (all records designated for printing), the processing is ended.

### [Layout Calculation Method (Details)]

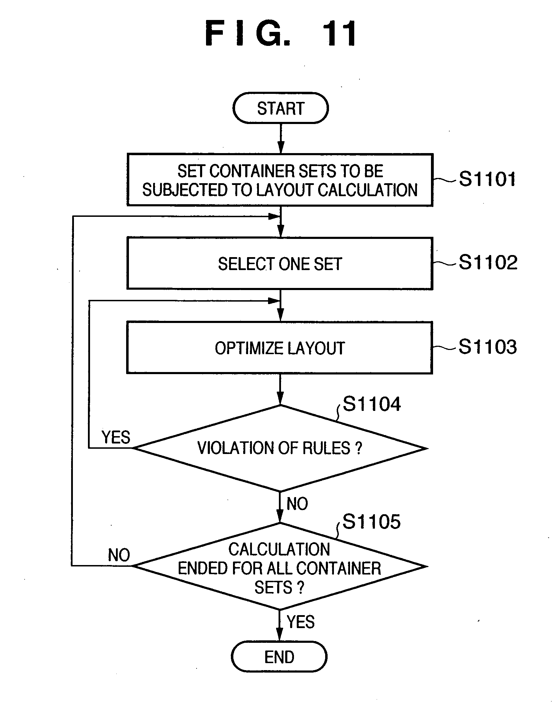

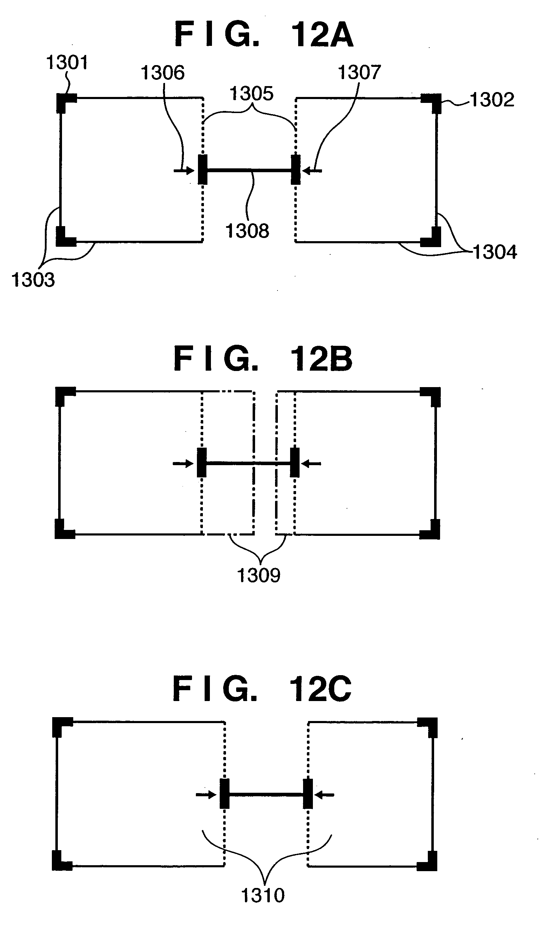

The layout calculation in step S1003 will be described next in detail. Fig. 11 is a flowchart showing a layout calculation method when the layout priority order of this embodiment is not set. Figs. 12A to 12C are views showing an example of the UI display at this time. Fig. 11 is a flowchart for explaining only the layout calculation processing method. This corresponds to the layout calculation method in printing/previewing one record of variable data print. When a plurality of records are present, the following processing is repeated.

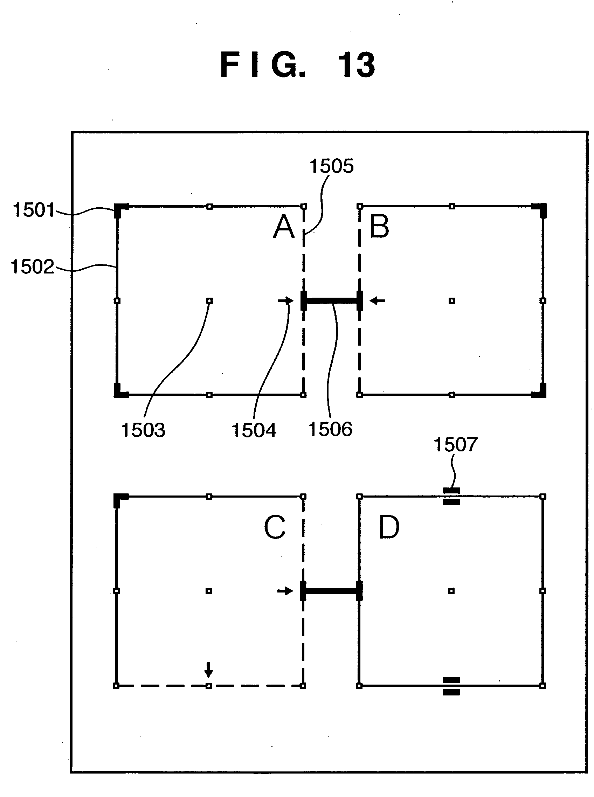

First, the layout editing application 121 obtains a set of containers whose layout should be calculated (step S1101). Layout calculation is executed for a set of associated containers. Referring to, e.g., Fig. 13, four containers are laid out on a page and associated with each other. In this case, the containers A and B are associated by a link, and containers C and D are also associated by a link. Hence, the containers A and B form set 1, and containers C and D form set 2. That is, a group of containers connected by a link is specified as a set. As described above, reference numeral 1501 denotes an anchor; 1502, a fixed side; 1503, a handle; 1504, an arrow which indicates the change direction of a flexible side; 1505, a flexible side; 1506, a link; and 1507, a slider.

The layout editing application 121 selects a set as a layout calculation target from the container sets obtained in step S1101 (S1102). For the selected container set, layout calculation is executed. First, the sizes of the two containers (A and B) as flexible elements included in the selected container set are calculated assuming that the containers are not affected by the image size or text amount of data to be inserted. More specifically, the layout editing application 121 determines whether the container A is an image data container or text container. This determination can be done on the basis of the attribute set for the container, as described above. Next, the layout editing application 121 loads the data to be inserted in the container A. When the container A is an image data container, the size (the number of horizontal pixels, the number of vertical pixels, and the resolution) of the image data is defined as the size of the container A without any constraint. When the container A is a text container, the amount of data to be inserted in the container A can be calculated on the basis of the number of characters of text data and the character attribute such as a font type, font size, character pitch, and line pitch designated by the container attribute of the container A. For the text container, a constraint is applied because the aspect ratio of the container A cannot be determined without considering a constraint. In the example shown in Fig. 13, since anchors are set at the upper left and lower left corners of the container A, the height (vertical direction) is fixed. Hence, the layout editing application 121 determines whether characters corresponding to the calculated data amount (text amount) can be inserted in the container A having the width (horizontal direction) set as the basic pattern of the container A. If it is determined that all characters can be inserted, the size (width and height) set by the basic pattern does not change in the container A. If it is determined that not all characters can be inserted, the container A expands in the horizontal direction because the height is fixed by setting the anchors. In this case, the layout editing application 121 calculates the width of the container A, which allows insertion of characters in the calculated amount, thereby calculating the size of the container A.

Next, the layout editing application 121 optimizes the layout such that the difference between the size of each container to be laid out and the actual content size becomes as small as possible (S1103). The layout is optimized such that the difference between the size of the content to be inserted and the size of layout becomes as equal as possible between the containers associated with each other to dynamically change their sizes. The layout editing application 121 obtains the size of the container set selected in step S1102, i.e., the total size of the container A, container B, and link 1506. Then, the layout editing application 121 calculates the difference between the total size and the size of the container set in the basic layout (in the example shown in Fig. 13, the size of the container set corresponds to the distance between the anchor icons of the containers A and B). If it is calculated in the preceding step that the width of the container A or B increases, a different value is generated. The layout editing application 121 equally distributes the difference value to the elements of the container set, thereby adjusting the layout. The layout editing application 121 can also be designed to equally distribute the difference value to the elements including the link 1506, i.e., to the container A, container B, and link 1506. The link 1506 whose length can be adjusted will be referred to as a flexible link.

The layout editing application 121 optimizes the layout. If a violation of rules has occurred, calculation is executed again to prevent any violation of rules (S1104). The rules described here are constraints set by the user in creating the layout. Examples of the constraints are a constraint on the container size change range or container position, and for a flexible link, a constraint on the change in link length. When the layout is calculated without any violation of rules, the layout of the set is completed. The processing in steps S1102 to S1104 is executed for all sets on the page. With the processing, the layout editing application 121 calculates the layout of the entire page (S1105).

Figs. 12A to 12C show a UI example in laying out containers without setting the priority order.

Fig. 12A shows a state in which records are inserted, and the layout is determined. Reference numerals 1301 and 1302 denote anchors; 1303 and 1304, fixed sides; 1305, a flexible side; 1306, an arrow which indicates the change direction of a flexible side; and 1308, a link. In this state, the records are changed, and contents having different sizes are inserted. Referring to Fig. 12B, the sizes of the new contents are superposed on the state shown in Fig. 12A. Reference numeral 1309 denotes a size of the content to be inserted in each container. Layout calculation is executed. Fig. 12C shows the result of layout calculation. The sizes of the containers are calculated such that they have the same difference to the size of the content to be actually inserted, and no violation of the above-described rules occurs. As shown in Fig. 12C, the content size (1309) to be inserted shown in Fig. 12B and a content size (1310) after calculation have the same difference to the reference container size.

### <Layout Adjustment by Container Corresponding to Empty Data>

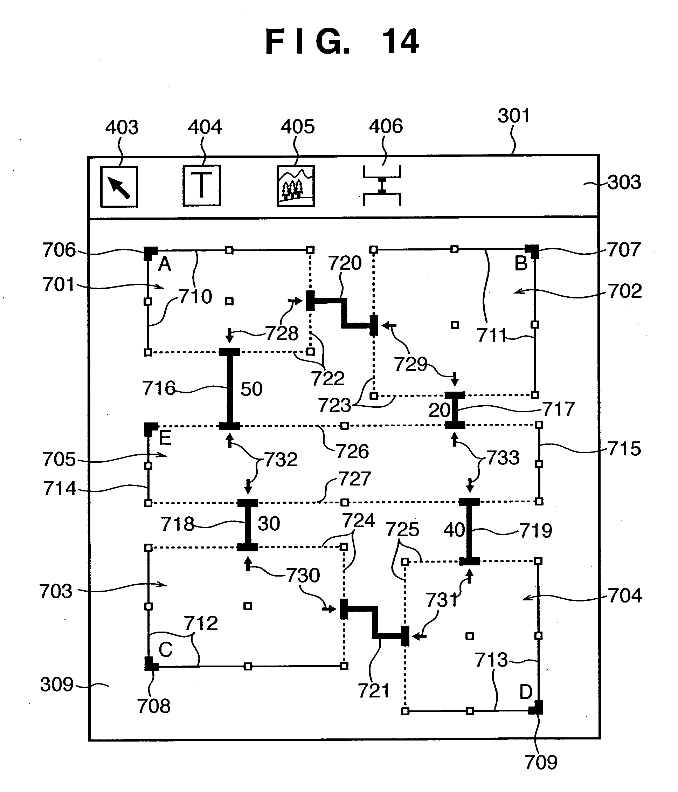

Fig. 14 shows an example of a layout created by using containers and links. As in Fig. 6, the application window 301 and tool bar 303 are present. A container A (701), container B (702), container C (703), container D (704), and container E (705) are laid out on the document template 309. A link 720 is set between the containers A and B. A link 716 is set between the containers A and E. A link 717 is set between the containers B and E. A link 721 is set between the containers C and D. A link 718 is set between the containers C and E. A link 719 is set between the containers D and E.

The containers are formed from anchor icons 706, 707, 708, and 709, fixed sides 710, 711, 712, 713, 714, and 715, and sides 722, 723, 724, 725, 726, and 727 whose positions are flexible. The fixed sides are indicated by solid lines. The sides whose positions are flexible are indicated by dotted lines. Each anchor is laid out at a corner of a corresponding container to indicate that the corner is fixed at the designated position on the document and does not move from that position. Links are set between the containers 701 to 705. Since there are sides which move flexibly, indicators 728, 729, 730, 731, 732 and 733 indicating the flexible moving directions are displayed in the containers A, B, C, D, and E, respectively. This is a function of indicating that the side of the container can move in the direction represented by an indicator (or in the reverse direction).

In the link setting example shown in to Fig. 14, the length of the link 716 is set to 50, the length of the link 717 is set to 20, the length of the link 718 is set to 30, and the length of the link 719 is set to 40. These values are used for the descriptive convenience. The links 720 and 721 have a step shape because the links are connected to the centers of the containers.

### <Container Property Setting>

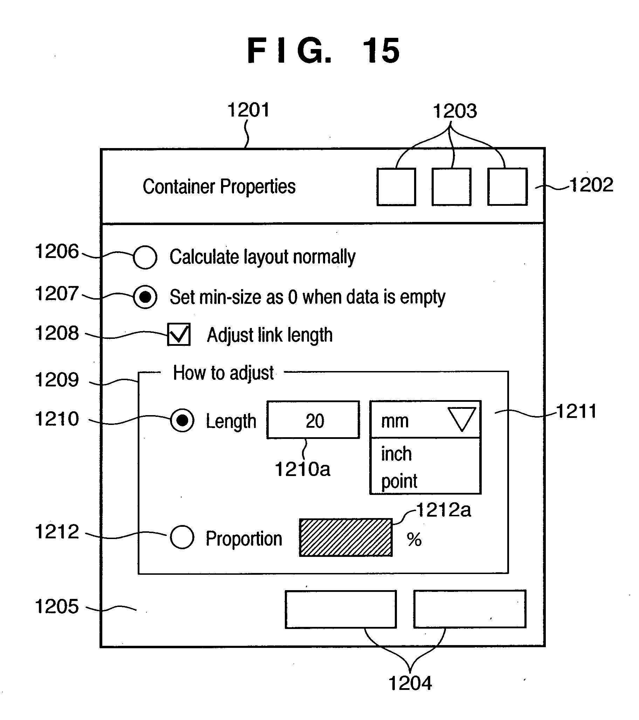

Fig. 15 is a view showing an example of a property dialogue window to set the attribute information of a container according to this embodiment. Fig. 15 shows a property dialogue window to set the attribute information of the container E (705). In the dialogue window shown in Fig. 15, only attributes related to set items corresponding to a case in which data to be inserted in the container is empty are illustrated. However, any other attribute (e.g., the constraint of the expansion and contraction range of the container size) can also be set, as a matter of course.

A property dialogue window 1201 includes a title bar 1202, tool buttons 1203, buttons 1204 to close (reflect set contents) or cancel (discard set contents) the property dialogue window, and an area 1205 in which various kinds of information are set. The property dialogue window 1201 also includes a select button 1207 of a zeroisation mode (Set min-size as 0 when data is empty) in which calculation is done while setting the container size to 0 when data to be inserted in the container is empty and a select button 1206 of a normal mode (Calculate layout normally) in which normal layout calculation is executed in accordance with the constraints of the container. The select buttons 1206 and 1207 are grouped and have exclusiveness so that they are alternatively selected. The select button 1206 (normal mode) is selected by default.

When the select button 1207 (zeroisation mode) is not selected, all items 1208 to 1212 (except a frame 1209) arranged at the lower level are inoperable and grayed out. When the select button 1207 (zeroisation mode) is selected, the link length adjustment check box 1208 (Adjust link length) is enabled. When the check mark in this box is turned on/off, whether to adjust the length of the link connected to the container can also be set.

Link length adjustment according to this embodiment will be described. For example, assume that three containers (container A, container B, and container C from the upper side) are laid out in the vertical direction, and links are set between them (between the containers A and B and between the containers B and C). Assume that the above-described zeroisation mode is set for the container B laid out at the center of this layout. When empty data is inserted in the container B, layout calculation is executed while setting the height to 0. However, the distance between the containers A and C equals a size obtained by adding the link set between the containers A and B to the link set between the containers B and C. That is, a link which apparently has an excess size is set between the containers A and C. A blank space more than necessary is formed. This may degrade the appearance of the document. In addition, even when data having a larger size is inserted in the container A or C, that space cannot effectively be used. When the height of the container B is set to 0, it is preferably to shorten the length of the link between the containers A and C and set the containers A and C to more optimum sizes.

Assume that the check mark in the check box 1208 is not ON (the check mark is kept OFF). In this case, only an operation of executing calculation while setting the container size to 0 is executed when data to be inserted in the container is empty. The lengths of all links set from this container are calculated in accordance with link setting. In this case, even when the containers are connected by a plurality of links, a blank space is formed because no size adjustment is done, resulting in bad layout balance. Also, when data to be inserted in another container is large, an optimum size may be obtained by utilizing the blanc space.

To fill or utilize the blank space as much as possible by adjusting the link lengths, it is effective to turn on the check mark in the check box 1208. When the check mark on the check box 1208 is ON, the items 1210 to 1212 arranged in the frame 1209 are enabled. In this embodiment, the length select button 1210 (Length) is selected by default.

The adjustment length select button 1210 and proportion select button 1212 are grouped and have exclusiveness so that they are alternatively selected. The function selected by the check box 1208 is an optional function of executing calculation while setting the container size to 0, adjusting the sizes of links set for the container, and re-calculating the layout. In this embodiment, as the link length adjustment method, when the adjustment length select button 1210 is selected, the length of the link set for the container is shortened by an amount corresponding to the input value input to an input item 1210a. This processing is executed for all links set for the container under the same conditions. When the select button 1210 is selected, the unit of the designated value can be selected from the list 1211.

With the above-described link length adjustment function, when a plurality of links are set, the balance of link lengths can be maintained to some degree. In addition, since the actual shortening length is designated, designation by the user is easy, and the layout result can readily be predicted. For the range of the value (adjustment value) which can be designated when the adjustment length select button 1210 is selected, basically, the minimum length of the plurality of links currently set for the container is set as the maximum value of the adjustment value. However, when the minimum link length is very short, and for example, 0.1 mm, the space can hardly be reduced. In some cases, the space needs to be filled even when the layout balance is sacrificed to some extent. Hence, an adjustment value larger than the minimum value of the link can also be set. When the adjustment value is larger than the minimum length of the link, the link length after adjustment may have a negative value. In this case, the link length is set to 0. Several examples can be considered, and for example, the link length may be increased without limit.

As another link length adjustment method, when the proportion select button 1212 is selected, the length of the link set for the container is changed at a designated proportion. According to this method, the proportion of the lengths of the plurality of links connected to the container is maintained in the state before adjustment. For this reason, when links are set between a plurality of containers, the layout state can effectively be maintained. That is, in a layout in which the user has laid out containers with certain intention, when filling another container into the space of a container in which empty data is inserted, the link sizes can be adjusted and the container sizes can be changed while maintaining the balance of the initially created layout.

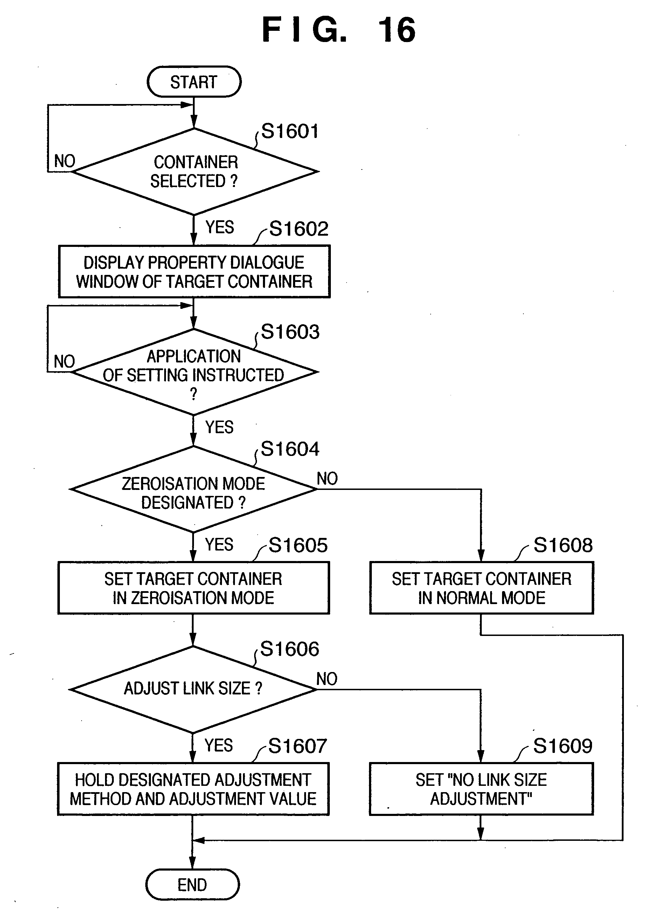

Processing of setting the properties of a container by using the dialogue described in Fig. 15 will be described below with reference to the flowchart shown in Fig. 16.

Fig. 16 shows processing for causing the user interface 103 to display the above-described property dialogue window (Fig. 12) and the user to execute setting for insertion of an empty container.

First, in a state in which a container is selected by the keyboard 132 or mouse 133, an instruction to display the property dialogue window 1201 of the selected container (to be referred to as a target container hereinafter) is input. The processing advances from step S1601 to step S1602. In step S1602, the user interface module 103 of the layout editing application 121 displays the property dialogue window of the target container. A description will be done below assuming that the container E (705) is selected (target container). The instruction to display the property dialogue window can be input by, e.g., clicking on the right button of the mouse or inputting an Alt key from the keyboard by the user. In this state, the select button 1206 (Calculate layout Normally) is selected (normal mode) on the property dialogue window 1201. To execute calculation while setting the container size to 0 (zeroisation mode) when empty data is inserted, the user selects the select button 1207 (Set min-size as 0 when data is empty).

In a state in which the select button 1207 is selected, the check mark in the check box 1208 is kept OFF. When the dialogue window 1201 is closed in this state, setting is done such that only processing for setting the size of the container to 0 is executed when empty data is inserted.

When the select button 1207 (zeroisation mode) is selected, and the check mark in the check box 1208 is turned on, input in the frame 1209 is permitted to cause the user to set the link length adjustment method. In this state, the link length adjustment method can be selected. As the adjustment method, one of the method of shortening the link by a designated length and the method of shortening the link at a designated proportion can be selected, as described above. By default, the adjustment length select button 1210 is selected, and the box to designate the shortening length is blank.

To select the method of designating the link length, the adjustment length select button 1210 is selected, a length is set in the box 1210a, and a unit is selected from the list 1211. On the other hand, when the method of shortening the link at a designated proportion is selected (when the proportion select button 1212 is selected), the proportion to be used for reduction is set in a box 1212a.

When the apply button 1204 is clicked on to instruct application, the processing advances from step S1603 to step S1604. The user interface 103 checks the set state in the property dialogue window. When the select button 1206 (normal mode) is selected, the flow advances from step S1604 to step S1608 to set the target container in the normal mode.

When the select button 1207 is selected, the flow advances from step S1604 to step S1605. The layout editing application 121 sets the target container in the zeroisation mode. The presence/absence of adjustment of the link size is determined by checking the check state of the check box 1208. When the check box 1208 has no check mark, the flow advances from step S1606 to step S1609 to set "no link size adjustment" for the target container. When the check box 1208 has a check mark, the flow advances from step S1606 to step S1607. In step S1607, the layout editing application 121 sets the link length adjustment method for the target container in accordance with the set state in the frame 1209, describes the set contents in the document template, and holds the contents in the HDD 140.

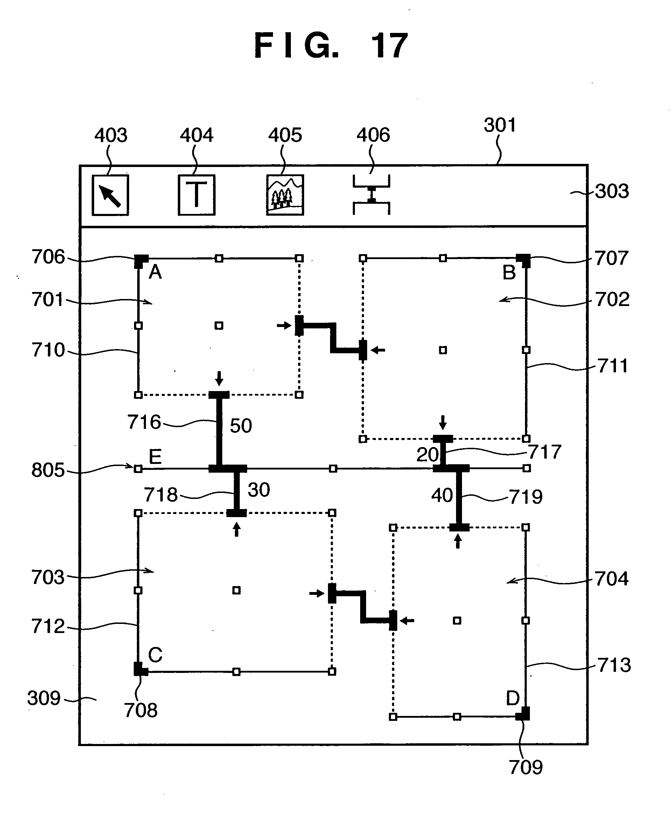

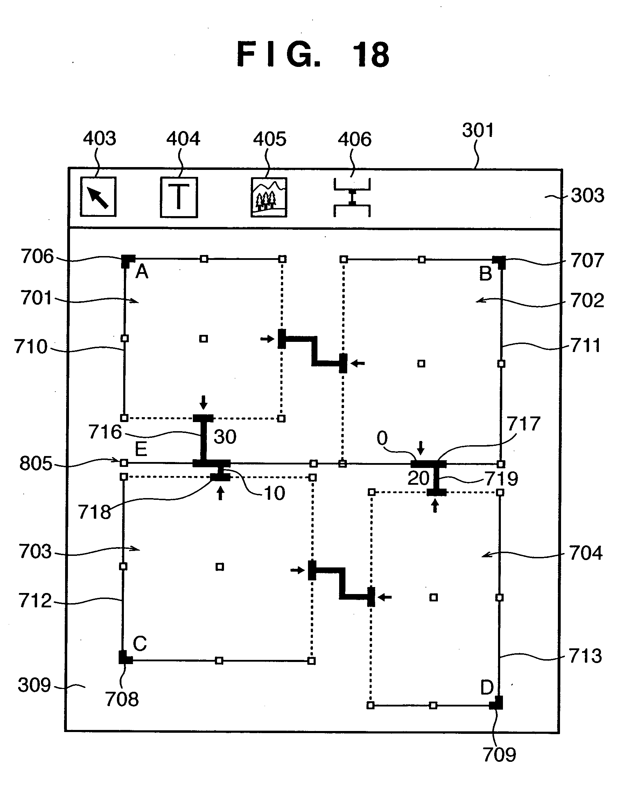

Fig. 17 is a view for explaining a change in layout when the container E (705) is set in the zeroisation mode in the layout shown in Fig. 14 (when the select button 1207 is selected, and the check box 1208 has no check mark in the property dialogue window shown in Fig. 15). Fig. 18 is a view for explaining a change in layout when the container E (705) in the layout shown in Fig. 14 has the set state in the property dialogue window shown in Fig. 15, and empty data is inserted in the container E.

As described above, Fig. 17 shows a layout adjustment result when calculation is done while setting the container size to 0, and no link length adjustment is executed when empty data is inserted. Referring to Fig. 15, the item 1207 is set so that calculation is executed while setting the container size to 0 when empty data is inserted. Hence, the size of the container E changes to 0 (805). At this time, since the containers A, B, C, and D are associated with the container E by the links 716, 717, 718, and 719, respectively, the container sizes increase.

As is apparent from Fig. 17, the distance between the containers A and E, containers B and E, containers C and E, and containers D and E do not change. However, since the size of the container E is "0", a space corresponding to the sum of the size "50" of the link 716 and the size "30" of the link 718, i.e., "80" is formed between the containers A and C. In addition, a space corresponding to the sum of the size "20" of the link 717 and the size "40" of the link 719, i.e., "60" is formed between the containers B and D. By executing the above-described link length adjustment, these spaces are filled to obtain great-looking layout. Alternatively, the enlargement regions of the containers A, B, C, and D are preferably widened to effectively use the space.

Fig. 18 shows a result obtained by adjusting the link lengths in addition to the result shown in Fig. 17. In the dialogue window shown in Fig. 15, the check box 1208 has a check mark, the adjustment length select button 1210 is selected, and "20" is designated as the input value in the box 1210a. When empty data is inserted in the container E, and its size becomes 0, the layout editing application 121 shortens the size of each link connected to the container E by "20". More specifically, the layout editing application 121 decreases the size of the link 716 from "50" to "30", the size of the link 717 from "20" to "0", the size of the link 718 from "30" to "10", and the size of the link 719 from "40" to "20". Consequently, as shown in Fig. 18, the distance between the containers A and C equals the sum "40" of the size "30" of the link 716 and the size "10" of the link 718. The distance between the containers B and D equals the sum "20" of the size "0" of the link 717 and the size "20" of the link 719. Accordingly, a space corresponding to the size "40" is used between containers A and C and between the containers B and D.

Assume that size of "20" or more is designated in the item 1210 shown in Fig. 15. For example, assume that "30" is designated, and the link size never becomes 0 or less. In this case, the size of the link 716 is "20", the size of the link 718 is "0", the size of the link 717 remains "0", and the size of the link 719 is "10". The distance between the containers A and C equals the sum "20" of the size "20" of the link 716 and the size "0" of the link 718. The distance between the containers B and D equals the sum "10" of the size "0" of the link 717 and the size "10" of the link 719.

When the proportion select button 1212 is selected as the link length adjustment method, and 80(%) is set in the box 1212a, the lengths of the links 716 to 719 change "50" → "40", "20" → "16", "30" → "24", and "40" → "32", respectively.

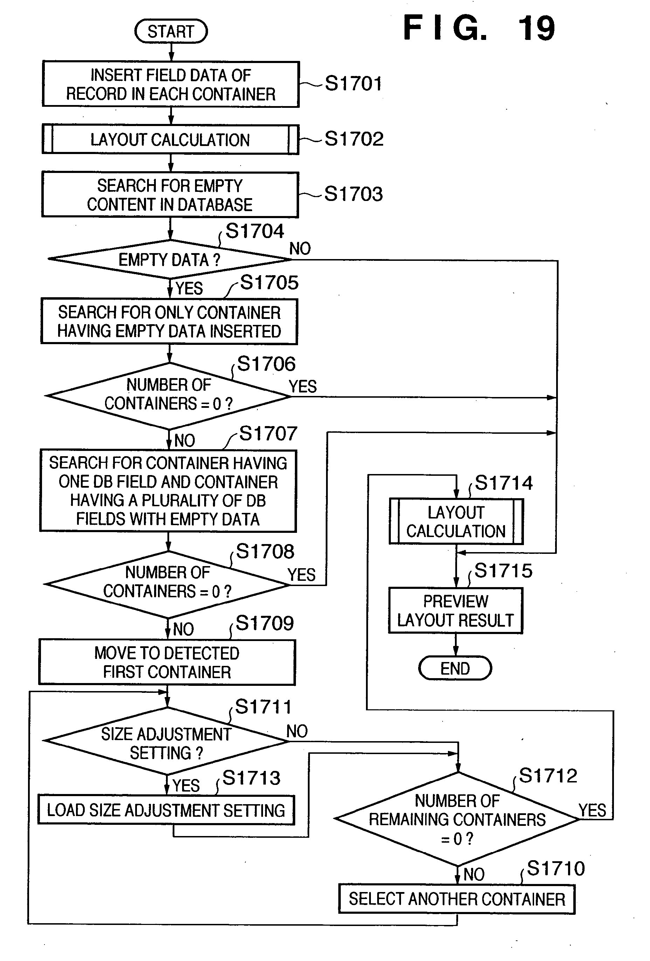

Fig. 19 is a flowchart showing the operation of the layout engine 105 when the layout state changes as in Figs. 14, 17, and 18.

First, in step S1701, the layout editing application 121 inserts the fields (also referred to as DB fields) of the records of the database in corresponding containers. In step S1702, layout calculation described with reference to the flowchart shown in Fig. 11 is executed. In this embodiment, layout adjustment is further executed by zeroising a container with empty data. Hence, the following processing is executed.

In step S1703, the layout editing application 121 searches for a DB field with empty data in the current records. If no empty DB field is found, the flow advances from step S1704 to step S1715 to preview, on the display, the layout result by layout calculation in step S1702. If an empty DB field is present, the flow advances from step S1704 to step S1705. The layout editing application 121 searches for a container in which the empty DB field is inserted. If no container is present in step S1705, i.e., when an empty DB field is present in the target record of the database, and the DB field is not associated with any containers, layout adjustment by zeroising the container size need not be executed. Hence, the flow advances to step S1715. The layout editing application 121 displays a preview of the layout result.

If the container is present in step S1705, the flow advances from step S1706 to step S1707 to search for containers with which only one DB field is associated and containers with which a plurality of DB fields with empty data are associated from the containers found in step S1705. If no container is found, there is no container in which empty data is inserted. The flow advances from step S1708 to step S1715 to preview the layout result.

The processing in step S1707 is executed due to the following reason. When a plurality of DB fields are associated with one container, some DB fields may have data, and the remaining fields may have empty data. In this case, at least one DB field has data, and the data is inserted in the container. Hence, calculation should not be done while setting the size of the container to 0. In step S1707, filtering is executed not to regard such a container as an empty container. On the other hand, containers with which one DB field is associated are already filtered in step S1704 as containers having empty DB fields. These containers have empty data, as a matter of course.

In step S1708, the layout editing application 121 determines on the basis of the search result in step S1707 whether the number of found containers is 0. If NO in step S1708 (when the number of found containers is one or more), the flow advances to step S1709 to move the focus to the container at the head of the search list (the container to which the focus has moved will be referred to as a container of interest hereinafter). It is checked whether the "zeroisation mode", in which calculation is executed while setting the container size to 0 if the data is empty, is set for the container of interest (step S1711). If YES in step S1711, the flow advances to step S1713. If NO in step S1711, the flow advances to step S1712. When the zeroisation mode is not set in the properties of the container of interest, it is checked whether the search list has the next container (step S1712). If YES in step S1712, the focus is moved to the next container (step S1710).

If YES in step S1711, the flow advances to step S1713. The layout editing application 121 zeroises the size of the container of interest. When settings of link adjustment have been done, the settings are loaded in the memory. Then, it is checked whether the search list has the next container (step S1712). If YES in step S1712, the focus is moved to the next container (step S1710).

The processing in steps S1711 to S1713 is repeatedly executed for all containers in the search list. After the processing is done for all containers, layout calculation is executed again on the basis of the information loaded in the memory in step S1714. More specifically, for an empty container for which the zeroisation mode is set, its size is set to 0. If link adjustment settings are present, the link length is adjusted in accordance with the contents of settings. In this way, for example, the layout shown in Fig. 14 is obtained by layout calculation in step S1702. When the container E is empty, the layout shown in Fig. 18 is obtained by layout calculation in step S1714. When the container size is zeroised, the container is compressed on the center line of the container to be zeroised. For example, for the links connected to the container E in the vertical direction, the upper and lower sides of the container E are superposed on a horizontal axis (805 in Fig. 18) which passes through the center of the container E. For the links in the horizontal direction, the left and right sides of the container are superposed on the center axis in the vertical direction. In other words, zeroising a container indicates expressing a container by either or both of two vertical and horizontal lines.

The position of the container after its size is zeroised is not limited to the above. The sides may be superposed on one of the upper and lower sides or one of the left and right sides of the container. Whether to superpose the sides on the central axis or one of the sides of the container may be set in the property dialogue window (Fig. 15).

In step S1715, the layout editing application 121 displays a preview of the layout result. The operation flow of the layout engine has been described above. «Second Embodiment»

To adjust link lengths when empty data is inserted in a container, various kinds of methods can be used in addition to the link adjustment method shown in Fig. 15 of the first embodiment. For example, in the method shown in Fig. 15, the designated link adjustment value (length or proportion) is applied to all links set for the container in which empty data is inserted. However, when links are set for four sides of a container, the user may want to set different adjustment values on the upper, lower, right, and left sides in some situations. The second embodiment provides a UI capable of setting a link length adjustment value for each side of a container to cope with such a case.

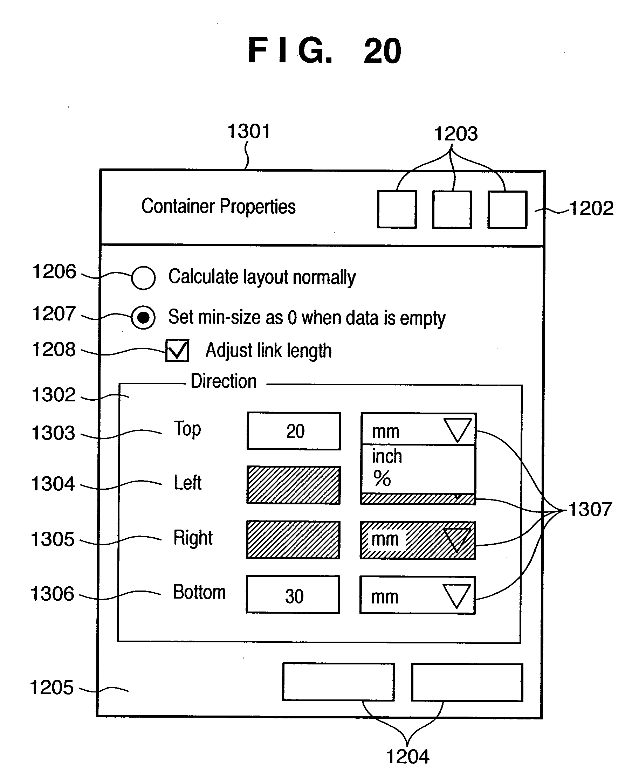

Fig. 20 shows a typical example of a property dialogue window. Items 1206, 1207, and 1208 are the same as in Fig. 15. When the item 1208 is selected, boxes in a frame 1302 are enabled. Only boxes corresponding to the directions of sides of the container where links are set are enabled. For example, a container E laid out as shown in Fig. 14 has links on two, upper and lower sides. Hence, in the frame 1302 of a property dialogue window 1301 shown in Fig. 20, an item 1303 (Top) and item 1306 (Bottom) are enabled. An item 1304 (Left) and item 1305 (Right) are disabled and grayed out.

According to the second embodiment, boxes to set adjustment values for the respective sides of a container are arranged. For each box, a unit can be selected from a list 1307.

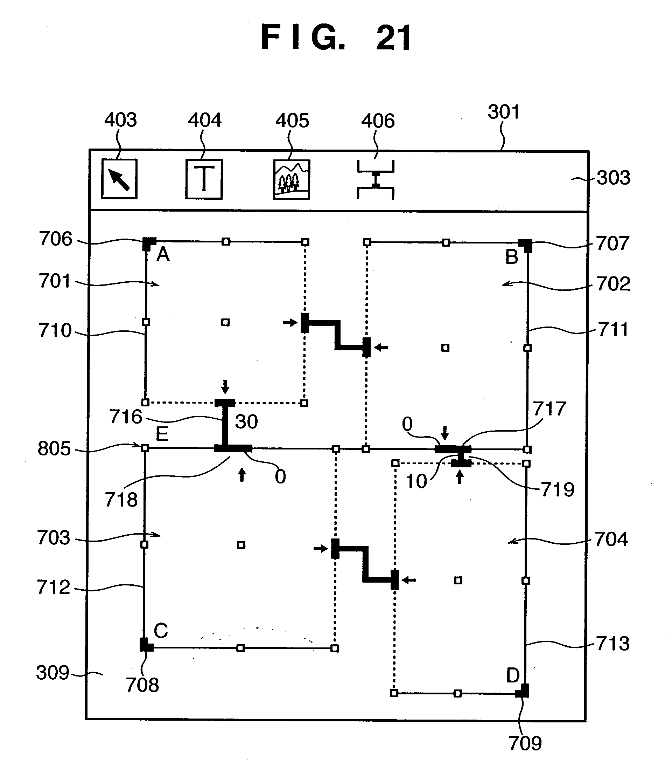

Fig. 21 is a view showing a result obtained by adjusting the layout shown in Fig. 14 in accordance with the link adjustment method set by the dialogue window shown in Fig. 20. Size "20" is set in the item 1303 (Top) in Fig. 20. Size "30" is set in the item 1306 (Bottom). Hence, the size of a link 716 on the upper side of the container E is 30 (= 50 - 20). Since a link 717 is also present on the upper side of the container E, its size is 0 (= 20 - 20). On the other hand, since a link 718 is present on the lower side of the container E, its size is 0 (= 30 - 30). Since a link 710 is also present on the lower side of the container E, its size is 10 (= 40 - 30). In this way, the layout is adjusted as shown in Fig. 21.

When the size of a container having links on the upper and lower sides and left and right sides is zeroised, containers connected to that container can interfere with each other. For example, a container connected to the upper side of a zeroisation target container and a container connected to the right side can interfere with each other upon zeroising the target container. In this embodiment, if such interference is detected in layout calculation, zeroisation of the container is inhibited.

As described above, according to the second embodiment, the link adjustment values can be set for the direction of each side. For this reason, the user can do more fine designation, and a wasteful space generated by a container with empty data can effectively filled. In addition, the user can designate the direction of a container whose space should preferentially be filled when empty data are inserted in the container. Hence, an accurate layout result on which the user's intention is reflected can be obtained. The link adjustment value may be set not only for each link direction but also for each container which has a link to the container with empty data inserted. The effectiveness of laying out containers while filling the space in accordance with the setting is also obvious.

### <Other Embodiment>

The present invention may also be implemented by supplying a storage medium which stores software program codes for implementing the functions of the above-described embodiments to a system or apparatus and causing the computer (or a CPU or MPU) of the system or apparatus to read out and execute the program codes stored in the storage medium.

In this case, the program codes read out from the storage medium implement the functions of the above-described embodiments by themselves, and the storage medium which stores the program codes constitutes the present invention.

As the storage medium for supplying the program codes, for example, a flexible disk, hard disk, optical disk, magnetooptical disk, CD-ROM, CD-R, magnetic tape, nonvolatile memory card, ROM, or the like can be used.

The functions of the above-described embodiments are implemented not only when the readout program codes are executed by the computer but also when the operating system (OS) running on the computer performs part or all of actual processing on the basis of the instructions of the program codes.

The functions of the above-described embodiments are also implemented when the program codes read out from the storage medium are written in the memory of a function expansion board inserted into the computer or a function expansion unit connected to the computer, and the CPU of the function expansion board or function expansion unit performs part or all of actual processing on the basis of the instructions of the program codes.

As many apparently widely different embodiments of the present invention can be made without departing from the spirit and scope thereof, it is to be understood that the invention is not limited to the specific embodiments thereof except as defined in the appended claims.

## Claims

1. A layout adjustment method of determining a layout of a page, comprising:
a partial region setting step of setting a basic pattern of a size and position of a partial region in which data is to be inserted;
a calculation step of calculating, for each partial region, a size suitable for drawing the data to be inserted on the basis of the data to be inserted in the partial region set in the partial region setting step;
an adjustment step of adjusting the layout in the page on the basis of the size of each partial region calculated in the calculation step; and
a designation step of designating whether to zeroise the size when the data assigned to the partial region is empty,
wherein in the adjustment step, when a partial region to which empty data are assigned is designated to zeroise the size of the partial region in the designation step, the layout in the page is adjusted while regarding the size of the partial region as zero.

2. The method according to claim 1, further comprising a basic layout step of determining a basic layout by laying out, in the page, a plurality of partial regions set in the partial region setting step,
wherein in the adjustment step, the layout in the page is adjusted on the basis of a relationship between the partial regions in the basic layout determined in the basic layout step.

3. The method according to claim 1, wherein
in the partial region setting step, change information to change a length of a link connected to a partial region upon zeroising the size of the partial region can be set, and
in the adjustment step, when the layout of the page is to be adjusted while regarding the size of the partial region to which empty data is assigned as zero, the length of the link connected to the partial region is changed in accordance with the change information.

4. The method according to claim 3, wherein
the change information indicates a length of shortening of the link, and
in the adjustment step, the length of the link connected to the partial region is shortened by the length indicated by the change information.

5. The method according to claim 3, wherein
in the change information, a length of shortening of the link is registered for each direction of link, and
in the adjustment step, the length of the link connected to the partial region is shortened by the length registered in correspondence with the direction of said link.

6. The method according to claim 3, wherein
the change information indicates a proportion of shortening of the link, and
in the adjustment step, the length of the link connected to the partial region is shortened in accordance with the proportion indicated by the change information.

7. The method according to claim 1, further comprising a display step of displaying a preview of the layout of the page adjusted in the adjustment step.

8. The method according to claim 1, further comprising a printing step of executing printing in accordance with the layout of the page adjusted in the adjustment step.

9. A layout adjustment apparatus for determining a layout of a page, comprising:
partial region setting means for setting a basic pattern of a size and position of a partial region in which data is to be inserted;
calculation means for calculating, for each partial region, a size suitable for drawing the data to be inserted on the basis of the data to be inserted in the partial region set by said partial region setting means;
adjustment means for adjusting the layout in the page on the basis of the size of each partial region calculated by said calculation means; and
designation means for designating whether to zeroise the size when the data assigned to the partial region is empty,
wherein when a partial region to which empty data are assigned is designated to zeroise the size of the partial region in said designation means, said adjustment means adjusts the layout in the page while regarding the size of the partial region as zero.

10. The apparatus according to claim 9, further comprising basic layout means for determining a basic layout by laying out, in the page, a plurality of partial regions set by said partial region setting means,
wherein said adjustment means adjusts the layout in the page on the basis of a relationship between the partial regions in the basic layout determined by said basic layout means.

11. The apparatus according to claim 9, wherein
said partial region setting means can set change information to change a length of a link connected to a partial region upon zeroising the size of the partial region, and
when the layout of the page is to be adjusted while regarding the size of the partial region to which empty data is assigned as zero, said adjustment means changes the length of the link connected to the partial region in accordance with the change information.

12. The apparatus according to claim 11, wherein
the change information indicates a length of shortening of the link, and
said adjustment means shortens the length of the link connected to the partial region by the length indicated by the change information.

13. The apparatus according to claim 11, wherein
in the change information, a length of shortening of the link is registered for each direction of link, and
said adjustment means shortens the length of the link connected to the partial region by the length registered in correspondence with the direction of said link.

14. The apparatus according to claim 11, wherein
the change information indicates a proportion of shortening of the link, and
said adjustment means shortens the length of the link connected to the partial region in accordance with the proportion indicated by the change information.

15. The apparatus according to claim 9, further comprising display means for displaying a preview of the layout of the page adjusted by said adjustment means.

16. The apparatus according to claim 9, further comprising printing means for executing printing in accordance with the layout of the page adjusted by said adjustment means.

17. A control program which causes a computer to execute layout adjustment processing for determining a layout of a page, the layout adjustment processing comprising:
a partial region setting step of setting a basic pattern of a size and position of a partial region in which data is to be inserted;
a calculation step of calculating, for each partial region, a size suitable for drawing the data to be inserted on the basis of the data to be inserted in the partial region set in the partial region setting step;
an adjustment step of adjusting the layout in the page on the basis of the size of each partial region calculated in the calculation step; and
a designation step of designating whether to zeroise the size when the data assigned to the partial region is empty,
wherein in the adjustment step, when a partial region to which empty data are assigned is designated to zeroise the size of the partial region in the designation step, the layout in the page is adjusted while regarding the size of the partial region as zero.

18. The program according to claim 17, further comprising a basic layout step of determining a basic layout by laying out, in the page, a plurality of partial regions set in the partial region setting step,
wherein in the adjustment step, the layout in the page is adjusted on the basis of a relationship between the partial regions in the basic layout determined in the basic layout step.

19. The program according to claim 17, wherein
in the partial region setting step, change information to change a length of a link connected to a partial region upon zeroising the size of the partial region can be set, and
in the adjustment step, when the layout of the page is to be adjusted while regarding the size of the partial region to which empty data is assigned as zero, the length of the link connected to the partial region is changed in accordance with the change information.

20. The program according to claim 19, wherein
the change information indicates a length of shortening of the link, and
in the adjustment step, the length of the link connected to the partial region is shortened by the length indicated by the change information.

21. The program according to claim 19, wherein
in the change information, a length of shortening of the link is registered for each direction of link, and
in the adjustment step, the length of the link connected to the partial region is shortened by the length registered in correspondence with the direction of said link.

22. The program according to claim 19, wherein
the change information indicates a proportion of shortening of the link, and
in the adjustment step, the length of the link connected to the partial region is shortened in accordance with the proportion indicated by the change information.

23. The program according to claim 17, further comprising a display step of displaying a preview of the layout of the page adjusted in the adjustment step.

24. The program according to claim 17, further comprising a printing step of executing printing in accordance with the layout of the page adjusted in the adjustment step.
